# EUROPÄISCHE PATENTSCHRIFT

(11) **EP 0 399 947 B1**
(45) Veröffentlichungstag und Bekanntmachung des Hinweises auf die Patenterteilung: **05.01.1994**
(21) Anmeldenummer: 90810331.0
(22) Anmeldetag: 01.05.1990
(51) Int. Cl.: G01F 11/02

(54) **Volumenmess- und Dosiereinrichtung**
Volume measuring and dosing device
Dispositif de mesure de volume et de dosage

(30) Priorität: 26.05.1989 CH 1990/89
(43) Veröffentlichungstag der Anmeldung: 28.11.1990
(73) Patentinhaber: METROHM AG, 9100 Herisau (CH)
(72) Erfinder: Zähner, Paul, CH-9100 Herisau (CH); Kaempf, Karl, CH-9100 Herisau (CH)
(74) Vertreter: Hepp, Dieter

(56) Entgegenhaltungen:
- EP-A- 0 096 088
- WO-A-86/00703
- DE-C- 564 186
- GB-A- 1 481 521

## Beschreibung

Die Erfindung betrifft eine Volumenmess- und Dosiereinrichtung gemäss Oberbegriff von Anspruch 1.

Solche Volumenmess- und Dosiereinrichtungen sind in vielen Ausführungsformen und für die verschiedensten Anwendungszwecke bekannt. In der Praxis werden sie meist zur Abgabe von Flüssigkeiten aus Vorratsbehältern, zur Uebertragung von Flüssigkeiten und/oder zum Mischen von Flüssigkeiten in definierten Volumensanteilen eingesetzt. So beschreibt z.B. die EP-A-96 088 eine Flaschenaufsatzkolbenbürette, bei welcher mittels eines Zylinder-Kolben-Ventilsystems Flüssigkeit aus einem Behälter entnommen und dosiert abgegeben werden kann. Der Antrieb des Zylinder-Kolben-Systems erfolgt manuell. Der Flüssigkeitsstrom wird wechselweise so gesperrt, dass Ansaugen aus dem Behälter und Abgeben über eine Auslassleitung abwechselnd möglich ist.

Die GB-PS-1,481,521 beschreibt eine Anordnung mit welcher mehrere verschiedene Flüssigkeiten in einem Zylinder-Kolbensystem aufgenommen und durch eine gemeinsame Auslassleitung wieder abgegeben werden können. Die Steuerung der Flüssigkeit geschieht über ein Schieber-Hahn-System, bei welchem eine Mehrzahl von Kanälen im Schieber des Hahn-Systems abwechselnd mit Oeffnungen für Auslass- bzw. Einlassleitungen verbindbar sind.

Aus der EP-B-188 453 der Anmelderin ist eine Vorrichtung zur quantitativen Bestimmung von Flüssigkeiten bekannt, bei welcher der Boden eines Zylinders mit Kanälen versehen ist. Die Kanäle sind dabei ohne Absperrorgan durch den Zylinderboden durchgeführt und enden in Oeffnungen auf dessen Innenseite, wobei die Stirnwand des Zylinders mit Dichtsitz auf dem Zylinderboden anliegt, um die Oeffnungen zu verschliessen.

Durch Relativverschiebung von Zylinder und Zylinderboden können die Oeffnungen im Zylinderboden freigegeben oder abgesperrt werden.

Diese bekannte Vorrichtung ist für Analysezwecke hervorragend geeignet. Der mechanische Aufwand für die Relativ-Bewegung von Zylinderboden und Zylinderwand ist jedoch relativ hoch. Ausserdem erfordert die Anordnung aus Antriebsgründen in der Regel eine feste Verbindung von Betätigungs-Vorrichtung und Zylinder-Kolben-Hahn-System. In der Praxis kann es aber wünschenswert sein, dass die Anordnung so gestaltet ist, dass auf einfache Weise die Betätigungs-Vorrichtung vom Zylinder-Kolben und Hahn-System getrennt werden kann, um z.B. Zylinder-Kolben-Systeme mit verschiedenen Volumen an die gleiche Betätigungsvorrichtung (z.B. ein elektronisch gesteuerter Motorantrieb) anschliessen zu können.

Ausserdem soll die Einrichtung gemäss vorliegender Erfindung einfach demontierbar sein, so dass die Zylinder und Kolben auswechselbar sind (z.B. ebenfalls zu Zwecken der Anpassung an verschiedene Volumina) und auch zu Reinigungszwecken Zylinder-, Kolben- und Hahn-System einfach zugänglich und austauschbar sind.

Zudem soll die Bedienung des Hahn-Systems möglichst einfach und sowohl manuell als auch motorisch durchführbar sein.

Erfindungsgemäss wird dies in erster Linie gemäss Kennzeichen der Patentansprüche erreicht.

Durch die Lagerung von Zylinder und Zylinderboden in einer verdrehbaren Halterung lässt sich auf einfachste Weise durch Verdrehen des Zylinders selbst der Hahn betätigen: Das Hahn-System besteht nur aus Zylinderboden und einem Hahn-Element und durch Verdrehen des Zylinders zusammen mit dem Zylinderboden lässt sich optimal einfach jede beliebige Hahn-Stellung einstellen. Dabei ist es konstruktiv besonders zweckmässig, wenn die Öffnung oder die Oeffnungen im Zylinderboden in Bezug auf die Drehachse exzentrisch angeordnet sind. Durch die Verdrehung können dabei verschiedene Oeffnungen (oder Paare von Oeffnungen) zur Deckung gebracht werden. Die Verdrehung des Zylinders in der Halterung kann manuell oder auch sehr einfach durch einen Motor erreicht werden. Vor allem bei manueller Verdrehung können Einrast- und/oder Anzeigelemente vorgesehen sein, die den jeweiligen Hahn-Positionen eindeutig zugeordnet sind. Selbstverständlich können im Zylinderboden mehrere Oeffnungen vorgesehen werden, die mit verschiedenen Oeffnungen im Hahn-Element zur Deckung gebracht werden. Dies hängt vom jeweiligen Anwendungsfall ab.

Besonders vorteilhaft ist es, wenn der Zylinder von einer Halterung und Befestigungseinrichtung umgeben ist, die formschlüssig am Zylinder und/oder am Zylinderboden angreift und die zusammen mit dem Zylinder verdrehbar gelagert ist. Die Befestigungseinrichtung kann dabei als Montage-Element dienen, welches Zylinder und Zylinderboden im Betrieb gegenüber dem Hahnelement positioniert, jedoch zu Austausch- oder Reinigungszwecken eine Trennung der Bauteile zulässt. Besonders vorteilhaft wirkt sich dies aus, wenn der Zylinder und/oder der Zylinderboden aus einem keramischen Material bestehen und wenn diese Bauteile durch die Halterung oder das Gehäuse dichtend zusammengehalten werden. Durch die Halterung oder ein als Halterung wirkendes Gehäuse wird also der wünschbare Einsatz keramischer Materialien bei einfacher Reinigung und Handhabung ermöglicht.

Besonders universell lässt sich die Erfindung anwenden, weil die Betätigungseinrichtung mit einer Kupplung zum trennbaren Verbinden mit dem Zylinder-Kolben-Hahn-System versehen ist. Vor allem wenn die Antriebseinrichtung einen elektrischen/elektronischen Antrieb für den Kolben und/oder die Drehbewegung des Zylinders aufweist, kann dadurch mit nur einer Betätigungseinrichtung eine Vielzahl von Zylinder-Kolben-Systemen betrieben werden.

Besonders vorteilhaft ist es dabei, wenn am Zylinder-Kolben-Hahn-System im Kupplungsbereich, d.h. vorzugsweise an der oberen Begrenzungsfläche, eine Einrichtung vorgesehen ist, welche der Betätigungseinrichtung meldet, welches Volumen das Zylinder-Kolben-System aufweist. Vorteilhaft kann dies so realisiert werden, dass am Zylinder-Kolben-Hahn-System in dem der Betätigungseinrichtung benachbarten Bereich ein Permanentmagnet angeordnet ist, dessen Lage und/oder Form und/oder Magnetstärke jeweils an das Volumen des Zylinders anpassbar ist. Wenn nun an der Betätigungseinrichtung ein elektromagnetischer Sensor, z.B. eine Spule, ein Reedrelais oder ein Uebertrager vorgesehen ist, so lässt sich auf bekannte Weise kontaktlos an die Betätigungseinrichtung ein Signal übertragen, welches dieser das Volumen des Zylinders "meldet". Beim Betätigen eines an sich bekannten Motor-Antriebs der Betätigungseinrichtung für den Kolben kann dann das zugehörige Kolben-Volumen beim Kolbenvorschub automatisch berücksichtigt werden.

Besonders einfach lässt sich das Ankuppeln von Zylinder-Kolben-Hahn-System und Betätigungseinrichtung praktisch realisieren, wenn zwei koaxiale Kupplungsanordnungen vorgesehen sind, von denen die innere als Kupplung für den Kolben-Antrieb dient, wogegen die äussere als Kupplung für die Verdrehung des Zylinders bzw. des Zylinderbodens zur Hahnbetätigung vorgesehen ist.

In der Praxis ist es selbstverständlich denkbar statt des Kolbens auch den Zylinder zu betätigen wie dies z.B. in der EP-A-96 088 beschrieben ist.

Die Betätigungseinrichtung kann auf beliebige Weise, z.B. mechanisch wie in der vorstehend genannten EP-A, realisiert werden. Zur Automatisierung von Dosiervorgängen ist es aber vorteilhaft, wenn ein Motorantrieb wenigstens des Zylinders vorgesehen ist, wie z.B. im Zusammenhang mit der EP-B-188 453 vorgeschlagen. Auch bei motorischem Antrieb kann die Hahnstellung manuell betätigt werden. Sofern Dosiervorgänge jedoch automatisiert werden sollen, ist es vorteilhaft, wenn auch die Betätigung des Hahn-Systems durch Verdrehen des Zylinders bzw. des Zylinderbodens durch einen Motor erfolgt.

Die Erfindung ist im folgenden in Ausführungsbeispielen anhand der Zeichnungen näher erläutert. Es zeigen:
- Figur 1: Eine schematische Darstellung einer Volumenmess- und Dosiereinrichtung mit den Merkmalen der Erfindung im Schnitt,
- Figur 2: eine Draufsicht auf die Betätigungsvorrichtung und das Zylinder-Kolben-Hahn-System in Richtung der Pfeile A-A bzw. B-B in Figur 1,
- Figur 3: einen Schnitt nächst der Linie C-C bzw. D-D in Figur 1,
- Figur 4: einen Ausschnitt durch ein abgewandeltes Zylinder-Kolben- und Hahn-System,
- Figur 5: eine Darstellung eines abgewandelten Hahn-Systems im Schnitt.

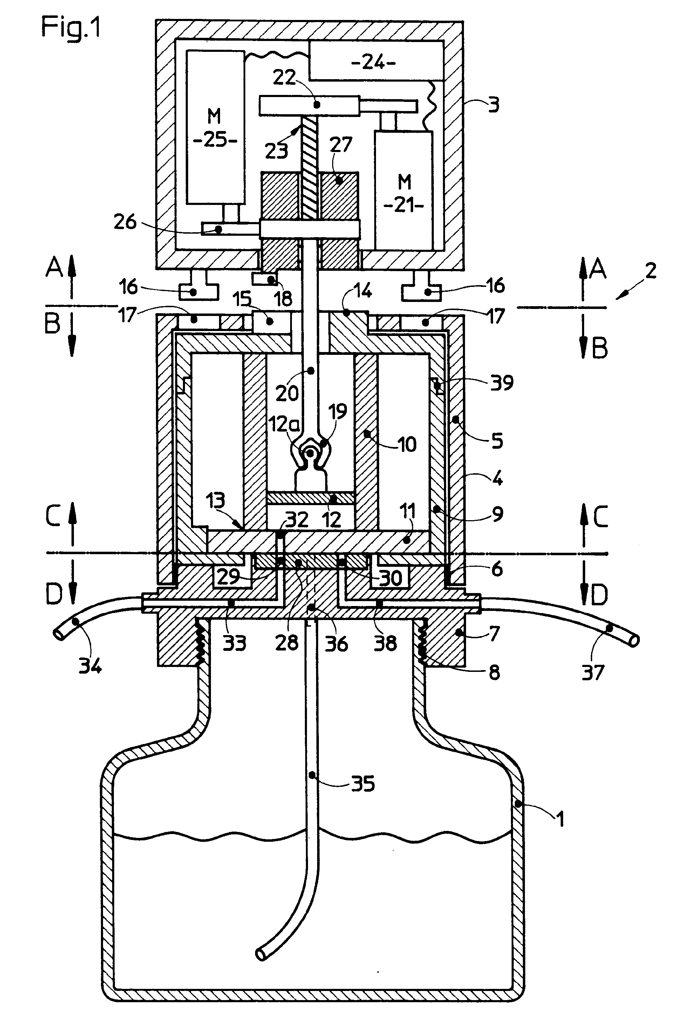

Gemäss Figur 1 ist auf einem Behälter 1 eine Volumenmess- und Dosiereinrichtung 2 aufgeschraubt, welche aus einer Betätigungseinrichtung 3 und einem Zylinder-Kolben- und Hahn-System 4 besteht. Das System 4 weist ein zylindrisches Gehäuse 5 auf, welches über eine Gewinde-Verbindung 6 mit einem zylindrischen Aufsetz-Teil 7 verbunden ist. Das Aufsetz-Teil 7 ist mittels eines Innengewindes 8 - ggf. mit Zwischenring - auf den Behälter 1 aufgeschraubt. Im Gehäuse 5 ist eine zylindrische Befestigungseinrichtung 9 drehbar gelagert. Das Gehäuse 5 hält einen Zylinder 10 und einen Zylinderboden 11 unter Kraftschluss derart zusammen, dass beim Verschieben eines Kolben 12 keine Flüssigkeit im Dichtbereich 13 zwischen Zylinderboden 11 und Zylinder 10 austritt.

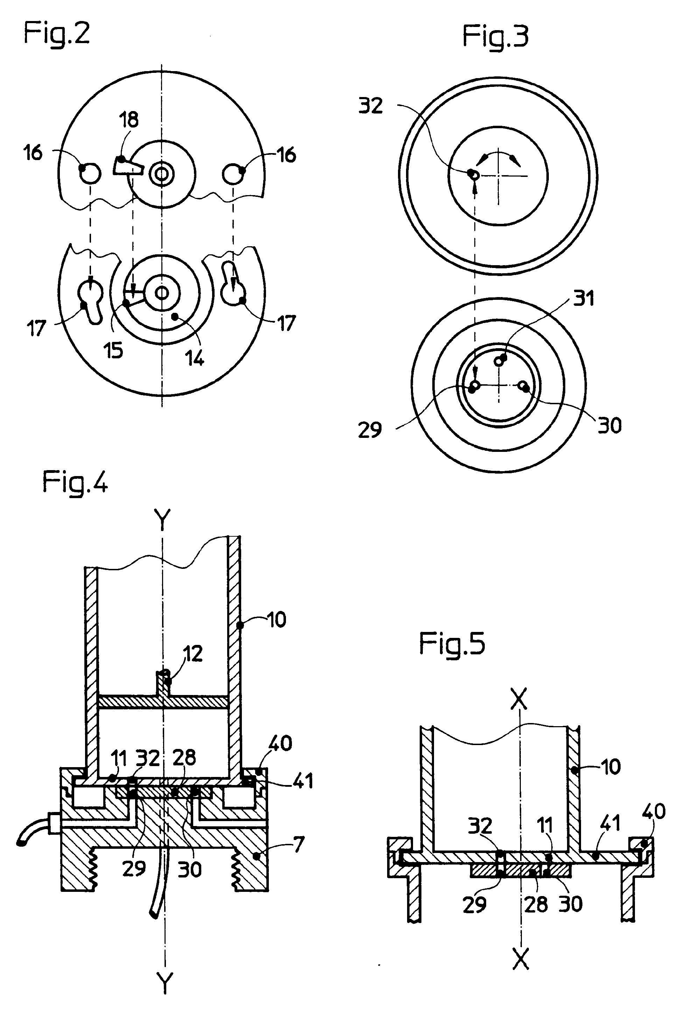

Die Befestigungseinrichtung 9 ist an ihrer Oberseite mit einem Vorsprung 14 versehen, der eine Nut 15 (Figur 2) aufweist.

In Figur 1 und 2 sind Betätigungseinrichtung 3 und Zylinder-Kolben-Hahn-System 4 zum Zwecke der Darstellung getrennt dargestellt. Im Betrieb wird die Betätigungseinrichtung 3 mittels Bolzen 16, die in Langlöcher 17 eingreifen mit dem System 4 formschlüssig verbunden. Dabei gelangt ein Mitnehmer 18 so weit in die Nut 15, dass sich eine formschlüssige Drehverbindung ergibt. Gleichzeitig greift ein Kupplungs-Element 19 über eine Kupplungs-Kugel 12a, so dass der Kolben 12 mit der Antriebs-Welle 20 verbunden wird. Sobald diese Verbindung hergestellt ist, kann der Kolben 12 durch einen Motor 21 in der Betätigungseinrichtung 3 angehoben oder abgesenkt werden. Zu diesem Zweck ist der Motor 21 über ein Getriebe 22 mit der Antriebswelle 20 verbunden. Das Getriebe 22 umgreift mittels eines Gewindes die mit einem Aussengewinde 23 versehene Antriebswelle 20, so dass durch den Gewindeeingriff die drehfest gelagerte Antriebswelle 20 angehoben oder abgesenkt werden kann. Solche Antriebe sind im übrigen Stand der Technik und müssen deshalb hier nicht näher erläutert werden. Der Motor 21 wird dabei durch eine automatische Steuereinrichtung 24 versorgt, so dass der Hub-Weg des Kolbens 12 mit dem zu fördernden Volumen koordiniert wird. Die Steuereinrichtung 24 kann dabei in bekannter Weise durch eine interne oder externe Bedienungseinrichtung, z.B. auch einen Mikroprozessor gesteuert werden, wie dies bei Büretten bekannt und gebräuchlich ist. In der Betätigungseinrichtung 3 ist ein zweiter Motor 25 vorgesehen, welcher mittels eines Zahnrads 26 eine zylindrische Hülse 27 antreibt, auf welcher der Mitnehmer 18 einstückig befestigt ist. Sobald sich die Hülse 27 verdreht, wird diese Drehbewegung über Mitnehmer 18 und Nut 15 auf die Befestigungseinrichtung 9 und damit auf den Zylinder 10 und den Zylinder-Boden 11 übertragen.

Der Zylinder-Boden wird mit Dichtsitz vom Gehäuse 5 gegen ein Hahn-Element 28 gepresst. Im Hahn-Element 28 befinden sich Kanal-Oeffnungen 29, 30, 31 (Figur 3), welche je nach Drehstellung des Zylinder-Bodens 11 abwechselnd mit einer Oeffnung 32 im Zylinder-Boden 11 zur Deckung gebracht werden. Bei der Stellung gemäss Figur 1 kommuniziert deshalb der Kammer-Inhalt des Zylinders 10 über die Oeffnung 32 im Zylinder-Boden 11 und die Oeffnung 29 im Hahn-Element 28 mit einem Kanal 33, welcher mit einem Schlauch 34 verbunden ist. Der Inhalt des Zylinders 10 kann deshalb durch den Schlauch 34 ausgestossen werden.

Soll z.B. in einem nächsten Arbeitsschritt Flüssigkeit aus dem Behälter 1 über einen Schlauch 35 in den Zylinder 10 eingesaugt werden, wird der Motor 25 betätigt, welcher über Zahnrad 26, Hülse 27, Mitnehmer 18, Nut 15 und Befestigungseinrichtung 9 den Zylinder 10 und den Zylinder-Boden 11 derart um die Längsachse verdreht, dass die Bohrung 32 im Zylinder-Boden 11 mit der Oeffnung 31 im Hahn-Element 28 fluchtet. In dieser Dreh-Stellung kommuniziert das Innere des Zylinders 10 über einen Kanal 36 mit dem Schlauch 35. Durch Betätigung des Motors 21 und Anheben des Kolben 12 mittels Antriebswelle 20 kann Flüssigkeit aus dem Behälter 1 aufgesaugt werden. Sofern anschliessend die in den Zylinder 10 aufgenommene Flüssigkeit über einen Schlauch 37 abgegeben werden soll, muss lediglich mittels Motor 25 in der bereits beschriebenen Weise die Befestigungseinrichtung 9 verdreht und dadurch die Oeffnung 32 mit der Oeffnung 30 zur Deckung gebracht werden, so dass der Zylinder mit einem Kanal 38 kommuniziert, der mit dem Schlauch 37 verbunden ist.

Um die Befestigungseinrichtung 9 im Gehäuse 5 verdrehbar zu lagern, ist wenigstens die Befestigungseinrichtung 9 aus einem gleitfähigen Material (Kunststoff) hergestellt. Die Befestigungseinrichtung 9 ist dabei zweiteilig ausgebildet und an einer Verbindungsstelle 39 trennbar, so dass Zylinder 10 und Kolben 12 leicht zugänglich sind. Dementsprechend kann, z.B. zu Reinigungszwecken die Gesamtanordnung leicht geöffnet werden. Zylinderboden 11 und Zylinder 10 sind aus geschliffenem Keramikmaterial hergestellt. Da der Zylinder 10 im Dichtbereich 13 nur am Zylinderboden 11 anliegt, nicht jedoch mit diesem verbunden ist, können nach Oeffnung der Befestigungseinrichtung 9 Zylinder 10 und Kolben 12 ohne weiteres gegen andere Zylinder-Kolbenkombinationen (auch mit unterschiedlichem Volumen/Durchmesser) ausgetauscht werden.

Figur 4 zeigt ein abgewandeltes Ausführungsbeispiel, bei welchem im Unterschied zum Ausführungsbeispiel gemäss Figur 1 der Zylinder 10 fest mit dem Zylinderboden 11 verbunden ist. Am Aufsetzteil 7 ist eine kreisringförmige Halterung 40 vorgesehen, welche einen kreisringförmigen Vorsprung 41 am Zylinder-Boden 11 übergreift. Auf diese Weise wird der Zylinder-Boden 11 einerseits dichtend gegen das Hahn-Element 28 gepresst. Andererseits ist der Zylinder 10 mit Zylinderboden 11 in der Halterung 40 drehbar gelagert, so dass die Oeffnung 32 im Zylinder-Boden analog dem Ausführungsbeispiel gemäss Figur 1 mit Oeffnungen 29, 30, 31 im Hahn-Element 28 zur Deckung gebracht werden kann. Beim Ausführungsbeispiel gemäss Figur 4 ist der Zylinder 10 nicht von einem Gehäuse umgeben, so dass der Zylinder von Hand verdreht werden kann, um die gewünschte Hahn-Stellung zu erreichen. Um eine klar definierte Positionierung zu schaffen, können zwischen Halterung 40 und kreisringförmigem Vorsprung 41 Rastelemente vorgesehen sein, welche jeweils beim Erreichen einer Durchlass-Position einrasten. Derartige Rastelemente, z.B. Kugel-Rasteinrichtungen, sind bekannt und gebräuchlich und müssen deshalb nicht näher erläutert werden.

In Figur 4 ist der Uebersichtlichkeit halber keine Betätigungseinrichtung dargestellt. Beim Ausführungsbeispiel kann entweder eine motorbetriebene Betätigungseinrichtung für den Kolben 12 vorgesehen werden oder auch eine bekannte Hand-Betätigungsanordnung Verwendung finden.

Figur 5 zeigt ein Ausführungsbeispiel, bei welchem der Zylinder 10 exzentrisch auf dem Vorsprung 41 angeordnet ist. Obwohl deshalb die Oeffnung 32 im Zentrum des Zylinder-Bodens 11 vorgesehen ist, ist diese exzentrisch zur Drehachse X angeordnet. Jede Verdrehung des Zylinders 10 um die Längsachse X führt deshalb zu einer Verlagerung der Oeffnung 32 über eine der Oeffnungen 29 oder 30.

Die Anordnung gemäss Figur 5 lasst sich besonders einfach verdrehen. Dabei wird ausserdem durch die exzentrische Gestaltung optisch eindeutig die jeweilige Hahn-Position angezeigt.

Selbstverständlich sind die in den Ausführungsbeispielen gezeigten Anordnungen nicht darauf beschränkt, dass sich im Zylinder-Boden nur eine einzige Oeffnung 32 befindet. Es bleibt dem Fachmann überlassen, wie viele derartige Oeffnungen er entsprechend dem Anwendungsfall im Zylinderboden 11 bzw. im Hahn-Element 28 vorsehen will. Aufgrund der scheibenförmigen Anordnung lassen sich dabei optimal einfach und mit geringstem Aufwand auch die kompliziertesten Hahn-Anordnungen mit einer grossen Anzahl von kommunizierenden Oeffnungen bzw. Kanälen verwirklichen. Der Hahn besteht dabei im Prinzip nur aus dem Hahn-Element 28 und dem Zylinder-Boden 11. Beide sind einfach zugänglich, einfach zu reinigen und auch austauschbar.

## Patentansprüche

1. Volumenmess- und Dosiereinrichtung mit einem Zylinder-Kolben- und Hahn-System (4) zum definierten Ansaugen und/oder Abgeben von Flüssigkeiten, wobei durch das Hahn-System wenigstens zwei Kanäle (33, 36, 38) mit wenigstens einer Oeffnung (32) im Zylinder-Boden (11) verbindbar sind und wobei eine Betätigungs-Einrichtung (3) zur Relativ-Verschiebung von Kolben (12) und Zylinder (10) beim Ansaugen oder Abgeben der Flüssigkeit mit dem Kolben antriebsmässig verbunden ist, dadurch gekennzeichnet, dass der Zylinder (10) auswechselbar in der Befestigungseinrichtung (9) eines Gehäuses (5) und/oder in einer Halterung (40) gehalten wird, die formschlüssig am Zylinder (10) und/oder am Zylinder-Boden (11) angreift, in welcher der Zylinder zusammen mit dem Zylinder-Boden (11) um eine mit der Zylinder-Längsachse zusammenfallende Drehachse (Y) oder eine parallel zu dieser verlaufende Drehachse (X) verdrehbar gelagert ist, dass die Öffnung (32) im Zylinder-Boden (11) in Bezug auf die Drehachse (X, Y) exzentrisch angeordnet ist, dass der Zylinder-Boden (11) mit Dichtsitz an einem Hahn-Element (28) mit wenigstens zwei Kanal-Öffnungen (29, 30, 31) anliegt, die mit den Kanälen (33, 36, 38) verbunden sind, wobei diese Kanal-Öffnungen (29, 30, 31) derart angeordnet sind, dass die Öffnung (32) im Zylinder-Boden (11) beim Verdrehen des Zylinders (10) und des Zylinder-Bodens (11) abwechselnd mit den Oeffnungen (29, 30, 31) des Hahn-Elements (28) zur Deckung bringbar ist, und dass die Betätigungseinrichtung (3) mit einer Kupplung (15, 18; 16, 17; 19, 12a) zum trennbaren Verbinden mit dem Zylinder-Kolben-Hahn-System (4) versehen ist, und einen Antrieb (21) zur Relativverschiebung von Kolben (12) und Zylinder (10) und/oder einen Antrieb (25) zum Verdrehen des Zylinder-Bodens (11) bzw. des Zylinders (10) und zum Betätigen des Hahn-Elements (28) aufweist.

2. Einrichtung nach Anspruch 1, dadurch gekennzeichnet, dass die Befestigungseinrichtung (9) zusammen mit dem Zylinder verdrehbar gelagert ist.

3. Einrichtung nach Anspruch 2, dadurch gekennzeichnet, dass der Zylinder (10) und/oder der Zylinder-Boden (11) aus einem keramischen Material besteht und dass Zylinder-Boden und Zylinder durch das Gehäuse (5) dichtend zusammengehalten werden.

4. Einrichtung nach einem der vorangegangenen Ansprüche, dadurch gekennzeichnet, dass die Betätigungseinrichtung (3) zwei Kupplungen (15, 18; 19, 12a) aufweist, von denen eine mit dem Kolben (12) und die andere mit dem Zylinder-Boden (11) bzw. der Befestigungseinrichtung (9) direkt oder indirekt in Wirkeingriff bringbar ist.

5. Einrichtung nach Anspruch 4, dadurch gekennzeichnet, dass die Kupplungen (18, 15 bzw. 19, 12a) koaxial angeordnet sind.

## Claims

1. A volume measuring and metering apparatus having a piston-cylinder and tap system (4) for definedly sucking in and/or discharging liquids, wherein at least two ducts (33, 36, 38) can be connected by the tap system to at least one opening (32) in the cylinder bottom (11) and wherein an actuating means (3) is drivingly connected to the piston (12) for relative displacement of the piston (12) and cylinder (10) when sucking in or discharging the liquid, characterised in that the cylinder (10) is held interchangeably in the fixing means (9) of a housing (5) and/or in a holding means (40) which positively lockingly engages the cylinder (10) and/or the cylinder bottom (11), and in which the cylinder together with the cylinder bottom (11) is mounted rotatably about an axis of rotation (Y) coinciding with the longitudinal axis of the cylinder or an axis of rotation (X) extending parallel to the axis of rotation (Y), that the opening (32) is arranged eccentrically in the cylinder bottom (11) with respect to the axis of rotation (X, Y), that the cylinder bottom (11) bears with a sealing fit against a tap element (28) with at least two duct openings (29, 30, 31) which are communicated with the ducts (33, 36, 38), wherein said duct openings (29, 30, 31) are so arranged that upon the rotary movement of the cylinder (10) and the cylinder bottom (11) the opening (32) in the cylinder bottom (11) can be brought alternately into alignment with the openings (29, 30, 31) of the tap element (28), and that the actuating means (3) is provided with a coupling (15, 18; 16, 17; 19, 12a) for separable connection to the piston-cylinder-tap system (4) and has a drive (21) for relative displacement of the piston (12) and the cylinder (10) and/or a drive (25) for rotating the cylinder bottom (11) or the cylinder (10) and for actuating the tap element (28).

2. An apparatus according to claim 1 characterised in that the fixing means (9) is mounted rotatably together with the cylinder.

3. An apparatus according to claim 2 characterised in that the cylinder (10) and/or the cylinder bottom (11) comprises a ceramic material and the cylinder bottom and cylinder are sealingly held together by the housing (5).

4. An apparatus according to one of the preceding claims characterised in that the actuating means (3) has two couplings (15, 18; 19, 12a), of which one can be brought directly or indirectly into operative engagement with the piston (12) and the other with the cylinder bottom (11) or the fixing means (9).

5. An apparatus according to claim 4 characterised in that the couplings (18, 15 and 19, 12a respectively) are arranged coaxially.

## Revendications

1. Dispositif de mesure de volume et de dosage, comportant un système à piston et robinet (4), pour aspirer et/ou distribuer de façon définie des liquides, au moins deux canaux (33, 36, 38) avec au moins une ouverture (32) ménagée dans le fond de cylindre (11) étant susceptibles d'être reliés au moyen du système à robinet et un dispositif d'actionnement (3) destiné à opérer un déplacement relatif du piston (12) et du cylindre (10) lors de l'aspiration ou de la distribution de liquide étant relié pour entraînement au piston, caractérisé en ce que le cylindre (10) est fixé de façon interchangeable dans le dispositif de fixation (9) d'un carter (5) et/ou dans une fixation (40), le dispositif de fixation ou la fixation s'engageant avec ajustement de forme sur le cylindre (10) et/ou sur le fond de cylindre (11), dispositif dans lequel le cylindre, conjointement le fond de cylindre (11) est monté de façon à pouvoir tourner autour d'un axe de rotation (Y) coïncidant avec l'axe longitudinal du cylindre, ou un axe de rotation (X) parallèle à celui-ci, en ce que l'ouverture (32) ménagée dans le fond de cylindre (11) est disposée de façon excentrée par rapport à l'axe de rotation (Y, Y), en ce que le fond de cylindre (11) appuie, en formant siège étanche, su un élément de robinet (28), avec au moins deux ouvertures de canaux (29, 30, 31), relies aux canaux (33, 36, 38), ces ouvertures de canaux (29, 30, 31) étant disposées de façon que l'ouverture (32) ménagée dans le fond de cylindre (11) peut être placée alternativement en coïncidence par rapport aux ouvertures (29, 30, 31) de l'élément de robinet (28) lors de la rotation du cylindre (10) et du fond de cylindre (11), et en ce que le dispositif d'actionnement (3) est pourvu d'un couplage (15, 18; 16, 17; 19, 12a), destiné à assurer une liaison désolidarisable avec le système cylindre-piston-robinet (4), et présente un entraînement (21) en vue d'opérer un déplacement relatif entre le piston (12) et le cylindre (10) et/ou un entraînement (25) destiné à opérer la rotation du fond de cylindre (11), respectivement du cylindre (10) et pour assurer l'actionnement de l'élément de robinet (28).

2. Dispositif selon la revendication 1, caractérisé en ce que le dispositif de fixation (9) est monté de manière à pouvoir tourner conjointement avec le cylindre.

3. Dispositif selon la revendication 2, caractérisé en ce que le cylindre (10) et/ou le fond de cylindre (11) sont composés d'un matériau céramique et en ce que le fond de cylindre et le cylindre sont assemblés de façon étanche au moyen du carter (5).

4. Dispositif selon l'une des revendications précédentes, caractérisé en ce que le dispositif d'actionnement (3) présente deux couplages (15, 18; 19, 12a), dont l'un peut être mis en action fonctionnelle, directement ou indirectement, avec le piston (12) et l'autre avec le fond de cylindre (11), respectivement le dispositif de fixation (9) .

5. Dispositif selon la revendication 4, caractérisé en ce que les couplages (18, 15 respectivement 19, 19a) sont disposés coaxialement.
